# EUROPEAN PATENT APPLICATION

(11) **EP 3 089 489 A1**
(43) Date of publication of application: **02.11.2016**
(21) Application number: 14875041.7
(22) Date of filing: 04.07.2014
(51) Int. Cl.: H04W 8/02, H04W 48/18

(54) **DEVICE FOR COMPREHENSIVELY DECIDING SERVICE DOMAIN AND ACCESS DOMAIN, AND ROUTING CALLING METHOD**

(30) Priority: 26.12.2013 CN 201310733734
(71) Applicant: ZTE Corporation, Shenzhen, Guangdong 518057 (CN)
(72) Inventor: ZHA, Dunlin, Shenzhen Guangdong 518057 (CN); YANG, Wei, Shenzhen Guangdong 518057 (CN); TU, Jiashun, Shenzhen Guangdong 518057 (CN); ZHAO, Wenxian, Shenzhen Guangdong 518057 (CN)
(74) Representative: Quinterno, Giuseppe
(86) International application number: PCT/CN2014/081658
(87) International publication number: WO 2015/096451

(57) **Abstract**

Provided are devices for comprehensive decision making of service domain and access domain and Voice over Long Term Evolution (VoLTE) call routing methods. The methods include that: when a call is originated from a Circuit-Switched (CS) network or an LTE/IP Multimedia Subsystem (IMS) network to a terminal, and when a device for comprehensive decision making of service domain and access domain determines that the terminal is in a dual registration mode, a Terminated Access Domain Selection (T-ADS) flow is executed to decide an access domain, thereby realizing the unity of a service domain and the access domain.

## Description

### Technical Field

The present disclosure relates to the field of communications, and in particular to devices for comprehensive decision making of service domain and access domain and methods for Voice over Long Term Evolution (LTE) (VoLTE) call routing.

### Background

IP Multimedia Subsystem (IMS) is a development direction of future multimedia communications, and is also the most important part of the next generation network. IMS is a subsystem which is proposed by Third Generation Partnership Project (3GPP) and supports IP multimedia services.

IMS-based VoLTE is a main accepted development direction of the 3GPP in terms of LTE network voice solution.

As coverage in an earlier stage of LTE network deployment is insufficient, in order to ensure the continuity of voice service, it is necessary to handover voice service from LTE network to mobile Circuit-Switched (CS) network by utilizing the broad coverage of the existing mobile CS network via Single Radio Voice Call Continuity (SRVCC) technology, thereby maintaining the continuity of voice service.

From the aspect of operation, most of operators for deploying the LTE network are experienced in the operation of the mobile CS network, and expect to provide better choices and seamless experiences for users. In the earlier stage of deployment of VoLTE or VoLTE/SRVCC solution, a vast majority of users are developed from an original 3G network, and both the users and the operators expect that a new VoLTE voice solution enables the users to still use the same numbers regardless of LTE/IMS network or the mobile CS network to which the users are registered. For the operators, number resources are saved, and the number route planning cost at an initial stage of introduction of the LTE/IMS network can be reduced. Basic requirements for the users are to freely change CS, VoLTE and SRVCC terminals without needing to notify the operators, and the users require, at least, that the type and quality of service experience shall not change in an original CS network.

In practical application, the VoLTE terminals, including a VoLTE terminal with SRVCC function, may simultaneously have a Circuit Switched Fallback (CSFB) registration capability. Thus, even if a user stays in the LTE network for a long time, dual registrations in both a Home Location Register (HLR) of the mobile CS network and the LTE/IMS network may exist simultaneously. In addition, the state of the user in the LTE/IMS network is not cancelled when handover from the LTE network to the mobile CS network, thereby also causing the existence of false dual registrations of the user. Consequently, a network to which the user is really registered must be determined by means of a further technical method.

Terminated Access Domain Selection (T-ADS) function is defined in a 3GPP standard. Namely, if a terminal is registered to both a CS network and an IMS network, the T-ADS function decides an actual possible registered network of the user by comparing the last active time of the user in a Serving General Packet Radio Service (GPRS) Support Node (SGSN) and a Mobility Management Entity (MME). If the last active time saved in the MME is latest, a VoLTE terminal with SRVCC function selects to camp on the LTE/IMS network. If the last active time saved in the SGSN is latest, the VoLTE terminal with SRVCC function selects to camp on the CS network.

The 3GPP partially standardizes IMS-based VoLTE call or VoLTE call with SRVCC technology, and mainly normalizes voice call flow and handover process for voice continuity. Due to the characteristics of a multi-mode single-standby terminal, the terminal may select only one network for registration (registration to either the LTE/IMS network or the mobile CS network) under a non-switched state.

According to VoLTE flow provided by VoLTE IR.64 standard, all terminating VoLTE users from the mobile CS network or VoLTE users with the SRVCC function are required to request the mobile CS network to transfer a session to an IMS network in a Customised Applications for Mobile network Enhanced Logic (CAMEL) trigger mode, and a service is provided in the IMS network no matter whether a current SRVCC user is actually registered to the mobile CS network or the LTE/IMS network.

The method above has significant defects as follows.
1) When the user is actually registered to the mobile CS network, terminating call from the mobile CS network to this user have to be routed to IMS network and the service is handled at the IMS network, thereby causing signalling and media circuity, prolonging call setup time and wasting signalling and media resources.
2) When the user is registered to the mobile CS network, while in a roaming scenario, the user returns to the IMS network for calling service handling, under such a situation, the problem of roaming CAMEL trigger intercommunity exists; and in practical application, operators have to give up triggering of the calling services in the IMS network, as a consequence, called services are collectively executed in the IMS network, while the calling services are still executed in the mobile CS network.
3) When an SRVCC user is registered to the mobile CS network, if there is a terminating call from the mobile CS network, a call bill will be generated during the execution of the services in the IMS network, and a call bill will also be generated when the call camps on the mobile CS network, thereby bringing the problem of association or repeat elimination of call bills and increasing the processing complexity of the call bills.
4) When the SRVCC user is registered to the mobile CS network, if there is a terminating call from the mobile CS network, services are handled in the IMS network, and then the call is routed back to and camps on the mobile CS network to page the user, thereby causing the indeterminacy of a supplemented service execution result, e.g., services such as call forward on busy and no answer may occur in the IMS network, may also occur in the CS network or may even occur in both the IMS network and the CS network.
5) The method requires all services to be executed in the IMS network, in an earlier stage of commercial deployment of SRVCC, all traditional services are required, at least, to be transplanted to the IMS network, otherwise, when the VoLTE terminal is registered to an original mobile CS network, service experiences are different, which makes it hard to convince existing customers, and the difficulty in deployment of a VoLTE/SRVCC commercial solution is increased.

Consequently, researching of a more effective VoLTE/SRVCC routing solution to solve the problems is of great practical significance for promotion of the development of the VoLTE industry.

### Summary

In order to solve the technical problems existing currently, the embodiments of the present disclosure provide devices for comprehensive decision making of service domain and access domain and methods for call routing.

An embodiment of the present disclosure provides a method for deciding VoLTE call routing, which may include that:
when a call is originated from a mobile CS network to a terminal, and when a comprehensive service domain and access domain decision deviceevice for comprehensive decision making of service domain and access domain in the mobile CS network determines that the terminal is in a dual registration mode, a T-ADS flow is executed by the device for comprehensive decision making of service domain and access domain in the mobile CS network to decide an access domain.

Optionally, in the method, the device for comprehensive decision making of service domain and access domain in the mobile CS network may be an HLR.

Optionally, the method may further include that:
when the terminal is in the dual registration mode, after the device for comprehensive decision making of service domain and access domain in the mobile CS network executes the T-ADS flow to decide the access domain, the device for comprehensive decision making of service domain and access domain in the mobile CS network selects to camp on an LTE/IMS network, the call is routed to the LTE/IMS network, and when the call passes through a Media Gateway Control Function (MGCF), the MGCF adds a set identifier to a Session Initiation Protocol (SIP) message, wherein the set identifier is used for indicating that there is no need to perform comprehensive service domain and access domain decision in the LTE/IMS network.

Optionally, in the method, the set identifier may be an Access Code (AC).

Optionally, the method may further include that:
when a call is originated from the LTE/IMS network to the terminal, and when a Call Session Control Function (CSCF) discovers that a session message does not contain the set identifier added by the MGCF, a device for comprehensive decision making of service domain and access domain in the LTE/IMS network judges whether the terminal is in the dual registration mode.

Optionally, in the method, the mobile CS network may be at least one of: Global System for Mobile Communications (GSM) network, Wideband Code Division Multiple Access (WCDMA) network, Code Division Multiple Access (CDMA) network, CDMA2000 network and a Time Division-Code Division Multiple Access (TD-CDMA) network.

Optionally, in the method, the terminal may be at least one of: a VoLTE-type multi-mode single-standby terminal, a VoLTE terminal supporting SRVCC, a multi-mode single-standby terminal supporting a Worldwide Interoperability for Microwave Access (WiMax) and CS network, and a multi-mode single-standby terminal supporting a Wireless Fidelity (WiFi) and CS network.

Another embodiment of the present disclosure also provides a method for deciding VoLTE call routing, which may include that:
when a call is originated from an LTE/IMS network to a terminal, and when a device for comprehensive decision making of service domain and access domain in the LTE/IMS network determines that the terminal is in a dual registration mode, a T-ADS flow is executed by the device for comprehensive decision making of service domain and access domain in the LTE/IMS network to decide an access domain.

Optionally, in the method, the device for comprehensive decision making of service domain and access domain in the LTE/IMS network may be a first Service Centralization and Continuity Application Server (SCC AS) in an IMS network.

Optionally, the method may further include that:
when the terminal is in the dual registration mode, the device for comprehensive decision making of service domain and access domain in the LTE/IMS network executes the T-ADS flow to decide the access domain and selects to camp on a mobile CS network, the LTE/IMS network cancels a dual registration state in an HLR of the CS network, and only a registration state of the CS network is retained; and after the call is routed to the mobile CS network, a device for comprehensive decision making of service domain and access domain in the mobile CS network cancels a comprehensive service domain and access domain decision operation according to obtained false registration information of an IMS network user, and only selects the CS network to execute the service domain and access domain operation.

Optionally, the method may further include that:
after the first SCC AS in the IMS network executes the T-ADS flow, a last SCC AS in the IMS network disables a T-ADS function.

Another embodiment of the present disclosure also provides a device for comprehensive decision making of service domain and access domain, which may include:
a judgement unit, configured to judge, when a call is originated from a mobile CS network to a terminal, whether the terminal is in a dual registration mode; and
a decision unit, configured to execute, when the terminal is in the dual registration mode, a T-ADS flow to decide an access domain.

Optionally, the device may be an HLR.

Another embodiment of the present disclosure also provides another device for comprehensive decision making of service domain and access domain, which may include:
a judgement unit, configured to judge, when a call is originated from an LTE/IMS network to a terminal, whether the terminal is in a dual registration mode; and
a decision unit, configured to execute, when the terminal is in the dual registration mode, a T-ADS flow to decide an access domain.

Optionally, the device may be a first SCC AS in an IMS network.

An embodiment of the present disclosure also provides a computer storage medium which may include a set of instructions. When the set of instructions are executed, at least one processor may be triggered to execute any of the methods for deciding VoLTE call routing.

According to the technical solutions in the embodiments of the present disclosure, by expanding the HLR in a 2G/3G mobile network and the SCC AS in the IMS network and making a comprehensive service domain and access domain decision, a domain which provides service for a terminal similar to VoLTE terminal or a VoLTE terminal with an SRVCC function is consistent with a domain through with a terminal accesses the network, thereby simplifying a VoLTE/SRVCC routing process, and avoiding the problems of call routing circuity, complicated service execution, repeated charging, roaming service triggering and the like.

### Brief Description of the Drawings

In the drawings (which may not be drawn proportionally), similar drawing marks may be used to describe similar components in different views. The similar drawing marks having different letter suffixes may represent different examples for the similar components. The drawings substantially show each embodiment discussed herein in an exemplary mode instead of a limitation mode.
Fig. 1 is a signalling flowchart when a terminal is registered to a mobile CS network and a call is originated from the mobile CS network to the called terminal according to an embodiment of the present disclosure;
Fig. 2 is a signalling flowchart when a terminal is registered to an LTE/IMS network and a call is originated from a mobile CS network to the called terminal according to an embodiment of the present disclosure;
Fig. 3 is a signalling flowchart when a terminal is registered to an LTE/IMS network and a call is originated from an IMS network to the called terminal according to an embodiment of the present disclosure;
Fig. 4 is a signalling flowchart when a terminal is registered to a mobile CS network and a call is originated from an IMS network to the called terminal according to an embodiment of the present disclosure;
Fig. 5 is a structural diagram of a device for comprehensive decision making of service domain and access domain according to an embodiment 2 of the present disclosure; and
Fig. 6 is a structural diagram of a device for comprehensive decision making of service domain and access domain according to an embodiment 3 of the present disclosure.

### Detailed Description of the Embodiments

In order to make the aims, technical problems and advantages of the present disclosure clearer, the technical solutions of the present disclosure will be described below with reference to the drawings and the embodiments in detail. It is important to note that the embodiments of the present disclosure and the characteristics in the embodiments can be combined randomly under the condition of no conflicts.

### Embodiment 1

In the present embodiment, a registration network for a similar VoLTE/SRVCC multi-mode single-standby terminal serves as a service network, that is, when the terminal is registered to a mobile CS network, services will be executed in the mobile CS network, and when the terminal is registered to an LTE/IMS network, services will be executed in the LTE/IMS network.

A principle for selecting a service domain is described as follows.

Firstly, if a user is only registered to the mobile CS network, the mobile CS network is selected to execute the services and page the terminal. The user may be a traditional 2G CS user, a 3G CS user, an LTE/CSFB user, a VoLTE user, a VoLTE user with an SRVCC switching function, or the like.

Secondly, if a user is only registered to the LTE/IMS network, the LTE/IMS network is selected to execute the services and page the terminal. The user may include, but not limited to, a VoLTE user, or a VoLTE user with SRVCC switching functions.

Thirdly, for service domain selection, when there is no operator VoLTE roaming agreement, a policy for selecting CS network routing unconditionally under a roaming state can be adopted according to an operator policy. Even if a called user is registered in the IMS network, the user is selected to camp on the CS network, and under such a condition, a roaming LTE terminal will camp on the CS network by using a CSFB voice solution.

On the basis of the above principle, the embodiment provides a method for deciding VoLTE call routing. The method not only supports VoLTE call routing under a comprehensive service domain and access domain decision, but also includes a call routing decision for a VoLTE terminal supporting SRVCC function. The method includes the operations as follows.

When a call is originated from a mobile CS network to a terminal, a device for comprehensive decision making of service domain and access domain in the mobile CS network judges whether the terminal is in a dual registration mode, and executes a T-ADS flow to decide an access domain when the terminal is in the dual registration mode, so as to ensure the unity of the service domain and the access domain.

The device for comprehensive decision making of service domain and access domain in the mobile CS network may be an HLR. Certainly, the device is not limited to the HLR, and may be any device having a comprehensive service domain and access domain decision capability.

In addition to the above operations, the method may further include operations as follows.

When a call is originated from an LTE/IMS network to the terminal, a device for comprehensive decision making of service domain and access domain in the LTE/IMS network judges whether the terminal is in a dual registration mode, and executes a T-ADS flow to decide the access domain when the terminal is in the dual registration mode, so as to ensure the unity of actual execution of the service domain and the access domain in the same network.

The device for comprehensive decision making of service domain and access domain in the LTE/IMS network may be a first SCC AS in an IMS. Certainly, the device may be any device having the comprehensive service domain and access domain decision capability, such as an intelligent network device (SCP).

The mobile CS network involved in the embodiment of the present disclosure may include GSM network, WCDMA network, CDMA network, CDMA2000 network, TD-CDMA network and the like. The terminal in the embodiment of the present disclosure may include a VoLTE-type multi-mode single-standby terminal, a VoLTE terminal supporting SRVCC, a multi-mode single-standby terminal supporting a WiMax and CS network, a multi-mode single-standby terminal supporting a WiFi and CS network, and the like.

In addition, in order to prevent a call originated from the mobile CS network is selected, by a comprehensive service domain and access domain decision made by the HLR, to camp on the IMS, after the call is routed to the IMS network, the first SCC AS repeatedly makes the comprehensive service domain and access domain decision in the IMS network, and when the call passes through an MGCF, the MGCF may add a set identifier to an SIP message, wherein the set identifier is used for indicating that there is no need to perform comprehensive service domain and access domain decision in the LTE/IMS network. Thus, the first SCC AS is prevented from being re-triggered in the IMS to make a decision so as to improve the utilization rate of system resources. Specifically, the set identifier may adopt an AC.

In order to prevent a call originated from the LTE/IMS network is selected, by a comprehensive service domain and access domain decision made by the first SCC AS in the IMS network, to camp on the mobile CS network, after the call is routed to the mobile CS network, the HLR repeatedly makes the comprehensive service domain and access domain decision. The HLR may acquire false registration information of an IMS network user, and the comprehensive service domain and access domain decision operation is cancelled according to the false registration information of the IMS network user. Namely, if the HLR can only find one CS state, the HLR will no longer make a comprehensive decision. The HLR may acquire the false registration information of the IMS network user in any mode. For example, when a comprehensive decision is made in the IMS network to select the mobile CS network, a registration state of the user in the IMS network may be actively cancelled, or the HLR is notified to identify false registration behaviours of the user in the IMS network.

From the method, it can be seen that the precondition for making the comprehensive service domain and access domain decision by the HLR is that: the HLR knows the registration state of the user in the mobile CS network (including LTE/CSTB), and also needs to obtain a user state in the LTE/IMS network. A mode of acquiring the user state of the IMS network by the HLR may include, but is not limited to, three modes as follows.

First, a Mobile Application Part (MAP) message can be sent to an IMS Home Subscriber Server (HSS) via the HLR, and the user state is obtained by query.

Second, when the user is registered to the IMS network, an IMS network device actively notifies the HLR of the registration state of the user in the IMS network.

Third, the HLR and the IMS HSS are combined into a unified platform, and the user state is acquired by means of internal messages. Likewise, the precondition for making the comprehensive service domain and access domain decision by the first SCC AS in the IMS network is that: the SCC AS knows the registration state of the user in the LTE/IMS network, and also needs to obtain the registration state of the user in the mobile CS network (including LTE/CSTB). A third party registration notice is subscribed for the SCC AS in the IMS network. A mode of acquiring the registration state of the user in the HLR by the SCC AS may include, but is not limited to, three modes as follows.

First, the registration state of the user in the CS network may be obtained by query through sending an MAP message to the HLR.

Second, a request for querying the state is sent to the IMS HSS via an sh interface, and the IMS HSS sends an MAP message to the HLR for query.

Third, the HLR and the IMS HSS are combined into a unified device, and the SCC AS acquires the registration state of the user in the mobile CS network via the sh interface.

The embodiment does not form any limitations to the methods for acquiring the user state of the IMS network by the HLR and acquiring the registration state of the user in the HLR by the SCC AS.

It is also important to note that: 3GPP and GSMA standards specify that T-ADS shall be executed in the last SCC AS of the IMS network. The significant improvements of the embodiment are explained as follows. The HLR of the mobile CS network and the first SCC AS of the LTE/IMS network execute a T-ADS process, and when a called flow begins, comprehensive service domain and access domain determination is carried out. Thus, in order to prevent unnecessary repeated execution of the T-ADS process, the last SCC AS in the IMS shall disable a T-ADS function and is only in charge of SRVCC function.

The specific realizing process of the method is described below by taking various application scenarios as examples.

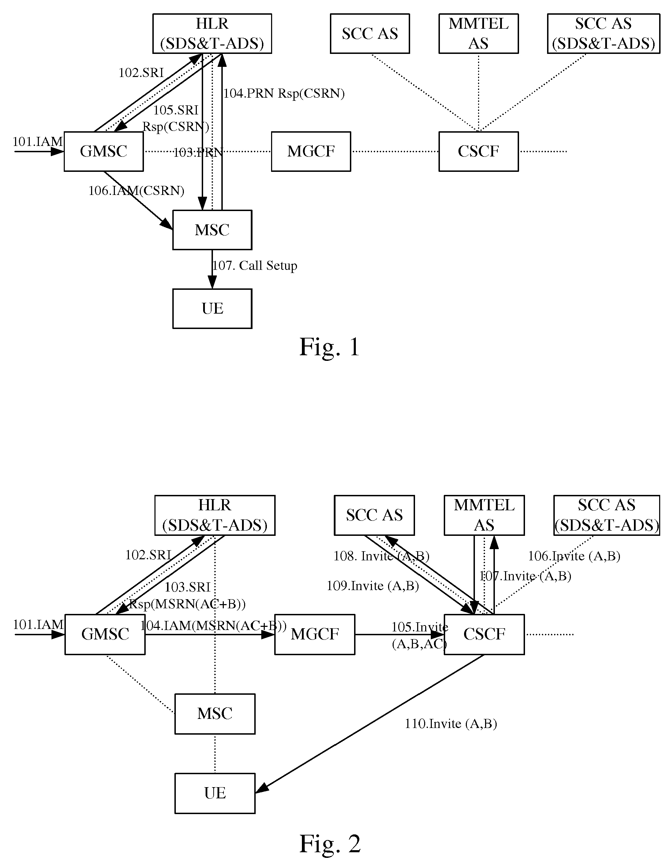

Fig. 1 shows a process when a terminal is registered to a mobile CS network, a call is originated from the mobile CS network to a called user and routing paging and camping is conducted for the called user. The process includes the steps as follows.

101: A call is originated from a mobile CS network, and a Gateway Mobile Switching Centre (GMSC) receives an Initial Address Message (IAM).

102: The GMSC sends an MAP message (MAP_SEND_ROUTING_INFORMATION (SRI)) to an HLR, the HLR judges whether the called terminal is in a dual registration mode, if the terminal is in the dual registration mode, a standard T-ADS flow is executed, namely an access domain is decided by T-ADS so as to ensure the unity of the service domain and the access domain.

During the execution of the standard T-ADS flow, if an operator policy selects the mobile CS network, the terminal is registered only to the mobile CS network instead of an LTE/IMS network, and when a T-ADS-based query result is the mobile CS network, a comprehensive decision will be made for the unified service domain and access domain of the mobile CS network, and subsequent operations are executed according to a normal mobile CS network call flow.

103: After the HLR makes the comprehensive decision, the mobile CS network is selected to execute services and perform access, and the HLR sends an MAP message (MAP_PROVIDE_ROAMING_NUMBER (PRN)) to a home Mobile Services Switch Centre (MSC) according to a Visited Mobile Services Switching Centre (vMSC) address updated by a terminal position.

Since technical personnel in the field should know the intelligent service trigger flow, the intelligent service trigger flow is not described here.

104: The MSC allocates a CS Routing Number (CSRN) and returns the CSRN to the HLR via a PRN Response (Rsp) message.

105: The HLR returns the CSRN to the GMSC via an SRI Rsp message.

106: The GMSC constructs an IAM according to the received CSRN, and routes the IAM to the home MSC according to the CSRN.

107: The MSC sends a call setup message to a base station to page a user.

A technical personnel, having the knowledge of a basic mobile network call flow in the field within which the present disclosure falls, can tell that except for the comprehensive service domain and access domain (SDS&T-ADS) decision by the HLR in the scenario, other flows are completely identical to a terminating call process of the mobile CS network, thereby simplifying routing behaviours of a new VoLTE terminal or a VoLTE terminal with SRVCC function in the mobile CS network. Even if the terminal is changed into a mobile CS terminal or the LTE/CSFB terminal, routing at a network side is not influenced.

Fig. 2 shows a process when a terminal is registered to an LTE/IMS network, a call is originated from a mobile CS network to a called user and routing paging and camping is conducted for the called user. The process includes the steps as follows.

101: A call is originated from a mobile CS network, and a GMSC receives an IAM.

102: The GMSC sends an SRI message to an HLR, the HLR judges whether the called terminal is in a dual registration mode, if the terminal is in the dual registration mode, a standard T-ADS flow is executed, namely, an access domain is decided by T-ADS so as to ensure the unity of the service domain and the access domain.

In the flow, if the LTE/IMS network is selected according to an operator policy, the terminal is registered only to the LTE/IMS network instead of the mobile CS network, and when a T-ADS-based query result is the LTE/IMS network, the LTE/IMS network is comprehensively decided to serve as both the service domain and the access domain.

103: After the HLR makes the comprehensive decision, the LTE/IMS network is selected to execute services and perform access, and the HLR constructs an IMS Routing Number (IMRN) as a prefix added with a called number, namely an IMRN (AC+B) serves as a new called number, and the IMRN is fed back to the GMSC via an SRI Rsp message.

The embodiment is described by taking generation of the IMRN via the HLR as an example, and a method for querying the IMRN by any network elements from the HLR to the IMS is also applicable.

104: The GMSC constructs a new IAM, and an IMRN (AC+B) serves as a new called number and is routed to the MGCF by an AC.

105: The MGCF executes mapping from the IAM to the SIP message, and the AC is deleted in order to facilitate normal routing and service executing of the called number B in the IMS network. Meanwhile, the MGCF adds the AC, serving as an identifier, into the SIP message, in order to subsequently prevent the first SCC AS from being re-triggered to make a comprehensive service domain and access domain decision in the IMS network, thereby optimizing a service flow.

The embodiment of the present disclosure does not describe how the MGCF adds the AC to the session message in detail, for example, the AC may be put to a customized SIP head as a special parameter of the existing SIP head. Any method for adding the AC to the session message can be adopted as long as a normal call flow is not influenced, and the AC can be easily understood by an initial Filter Criteria (iFC) of the IMS.

106: If the CSCF discovers that there is the AC identifier added by the MGCF in the session message according to the iFC, the CSCF directly sends a session setup message to a Multimedia Telephony service Application Server (MMTEL AS) to execute IMS services according to the iFC without triggering the first SCC AS to make a comprehensive service domain and access domain decision.

107: The MMTEL AS sends the session setup message to the CSCF after executing the services.

108: The CSCF sends the session setup message to the last SCC AS of the IMS.

109: The last SCC AS no longer executes the T-ADS flow of 3GPP and GSMA standards, and only executes SRVCC anchoring preparation flow; and the SCC AS sends the session setup message to the CSCF.

110: The CSCF sends the session setup message to an LTE base station to page a user.

A technical personnel, having the knowledge of a basic mobile network call flow in the field within which the present disclosure falls, can tell that, in the scenario, except for the comprehensive service domain and access domain (SDS&T-ADS) decision made by the HLR and the fact that the last SCC AS does not execute the T-ADS flow when a terminating call is handled at the LTE/IMS network, other flows are completely identical to a terminating call flow from the mobile CS network to a called IMS user, thereby simplifying routing behaviours of a new VoLTE terminal or a VoLTE terminal with SRVCC function in the mobile CS network.

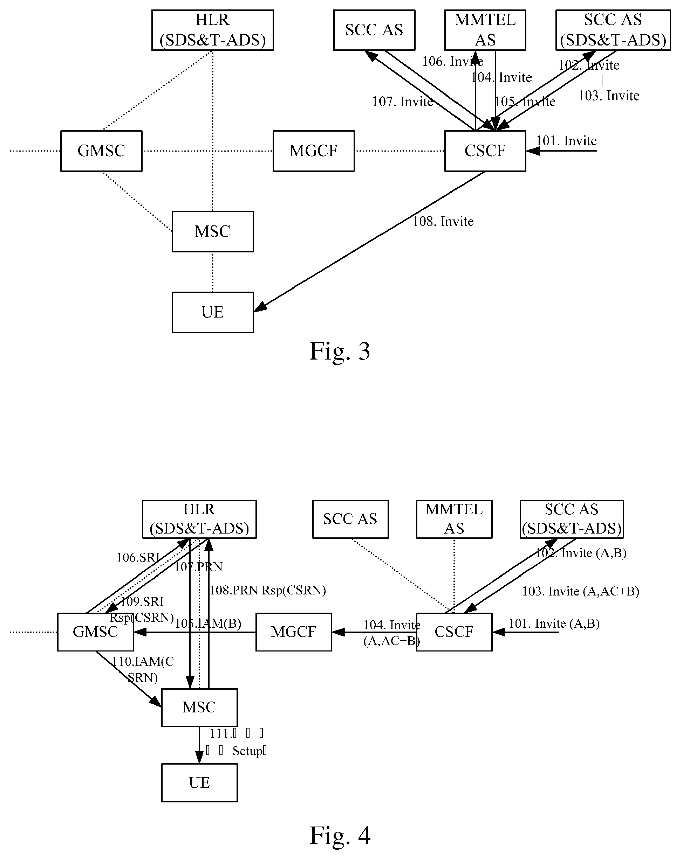

Fig. 3 shows a process when a terminal is registered to a mobile LTE/IMS network, a call is originated from an IMS network to a called user and routing paging and camping is conducted for the called user. The process includes the steps as follows.

101: A call is originated by a calling party from an IMS network, the calling party is a random IMS user, and the call is routed after entering a CSCF.

102: The CSCF discovers that there is no AC identifier added by an MGCF in a session message according to an iFC, and triggers a first SSC AS to make a comprehensive service domain and access domain decision.

103: As a terminal is actually registered to an LTE/IMS network, a result obtained by making the comprehensive service domain and access domain decision by the first SSC AS is that the LTE/IMS network is selected, and the SCC AS returns the session setup message to the CSCF.

104: The CSCF sends the session setup message to an MMTEL AS according to the iFC to execute IMS services.

105: The MMTEL AS sends the session setup message to the CSCF after executing the services.

106: The CSCF sends the session setup message to the last SCC AS of an IMS according to the iFC.

107: The last signed SCC AS in the IMS network no longer executes the T-ADS flow of 3GPP and GSMA standards, and only executes SRVCC anchoring preparation flow, and the SCC AS sends the session setup message to the CSCF.

110: The CSCF sends the session setup message to an LTE base station to page a user.

A technical personnel, having the knowledge of a basic mobile network call flow in the field within which the present disclosure falls, can tell that except for the fact that the first SCC AS is triggered to make the comprehensive service domain and access domain (SDS&T-ADS) decision in the embodiment, a terminating call flow from the IMS network to a user registered to the LTE/IMS network is completely identical to a IMS user calling flow in the related art. Compared with a VoLTE calling flow specified by 3GPP and GSMA standards, the flow has the advantage that the T-ADS decision is only transplanted from the last SCC AS signed in the IMS to the first SCC AS to be executed.

Fig. 4 shows a process of when a terminal is registered to a mobile CS network, a call is originated from an IMS network to a called user and routing paging and camping is conducted for the called user. The process includes the steps as follows.

101: A call is originated by a calling party from an IMS network, the calling party is a random IMS user, and the call is routed after entering a CSCF.

102: The CSCF discovers that there is no AC identifier added by an MGCF in a session message according to an iFC, and triggers a first SSC AS to make a comprehensive service domain and access domain decision.

103: As a terminal is actually registered to a mobile CS network, a result obtained by making the comprehensive service domain and access domain decision by the first SSC AS is that the mobile CS network is selected.

In this step, if the SCC AS discovers that the user is registered to both the mobile CS network and the LTE/IMS network and a result for the comprehensive service domain and access domain decision is the mobile CS network, the SCC AS notifies the network that the IMS state is a false state, and a notifying method may include: sending a Purge message to notify an HLR or cancelling the IMS network state. Thereafter, the SCC AS adds an AC in front of the original called number B, namely the called number is changed into AC+B, and the SCC AS sends a session setup message carrying a new called number to the CSCF.

104: The CSCF sends the session setup message to an MGCF according to the AC.

105: The MGCF deletes the AC in front of the called number according to a routing rule, converts an SIP message into an IAM, and sends the IAM to a GMSC.

106: The GMSC sends an SRI message to the HLR.

107: The HLR receives the SRI message, as the first SCC AS in the IMS network has deregistered the state of a called user in the IMS network or notifies the HLR that the IMS state is a false state, the HLR only needs to consider a registration state of the user in the mobile CS network, therefore selects to camp on the mobile CS network to page the user, and the HLR sends a PRN message to a home MSC according to a vMSC address updated by a terminal position.

In this step, if there is no intelligent service to be triggered or there is an intelligent service to be triggered, since the flow is already known to technical personnel in the field, the detailed flow is not described in detail here. Also, since technical personnel in the field should also know an intelligent service trigger flow, the intelligent service trigger flow is not described here.

108: The MSC allocates a CSRN, and returns the CSRN to the HLR via a PRN Rsp message.

109: The HLR returns the CSRN to the GMSC via an SRI Rsp message.

110: The GMSC constructs an IAM according to the CSRN, and routes the IAM to the home MSC according to the CSRN.

111: The MSC sends a call setup message to a base station to page the user.

A technical personnel, having the knowledge of a basic mobile network call flow in the field within which the present disclosure falls, can tell that except for the fact that the first SCC AS is triggered to make the comprehensive service domain and access domain (SDS&T-ADS) decision in the flow described by the embodiment, a terminating call flow from the IMS network to a user registered to the mobile CS network is completely identical to a flow of calling a mobile CS network user by an IMS user adopted in the related art. Compared with a VoLTE calling flow specified by 3GPP and GSMA standards, the flow has the advantage that the T-ADS decision is only transplanted from the last SCC AS signed in the IMS to the first SCC AS to be executed. The situation that the user may not be registered to the IMS network to execute services is avoided.

### Embodiment 2

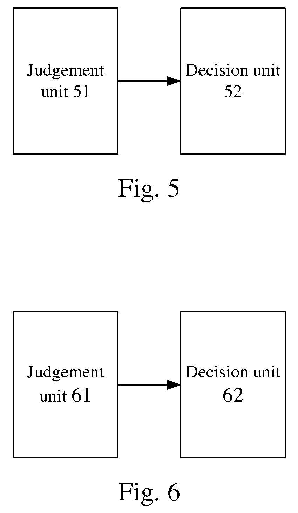

The embodiment provides a device for comprehensive decision making of service domain and access domain. As shown in Fig. 5, the device at least includes:
a judgement unit 51, configured to judge, when a call is originated from a mobile CS network to a terminal, whether the terminal is in a dual registration mode; and
a decision unit 52, configured to execute, when the terminal is in the dual registration mode, a T-ADS flow to decide an access domain so as to ensure the unity of the service domain and the access domain.

Specifically, the device for comprehensive decision making of service domain and access domain may be an HLR.

During practical application, the judgement unit 51 and the decision unit 52 may be realized by a Central Processing Unit (CPU), a Digital Signal Processor (DSP) or a Field-Programmable Gate Array (FPGA) in the device for comprehensive decision making of service domain and access domain.

### Embodiment 3

The embodiment provides a device for comprehensive decision making of service domain and access domain. As shown in Fig. 6, the device at least includes:
a judgement unit 61, configured to judge, when a call is originated from an LTE/IMS network to a terminal, whether the terminal is in a dual registration mode; and
a decision unit 62, configured to execute, when the terminal is in the dual registration mode, a T-ADS flow to decide an access domain so as to ensure the unity of the service domain and the access domain.

Specifically, the device for comprehensive decision making of service domain and access domain may be a first SCC AS in an IMS network.

During practical application, the judgement unit 61 and the decision unit 62 may be realized by a CPU, a DSP or an FPGA in the device for comprehensive decision making of service domain and access domain.

Technical personnel in the field can understand that all or some steps in the method can be completed by instructing relevant hardware via a program, and the program can be stored in a computer readable storage medium such as a read-only memory, a disk memory or an optical memory. Optionally, all or some steps in the embodiment can also be realized by using one or more integrated circuits. Correspondingly, each module/unit in the embodiment can be realized by adopting a form of hardware or can be realized by adopting a form of a software function module. The present disclosure is not limited to a combination of hardware and software in any specific form.

Technical personnel in the field shall know that the embodiments of the present disclosure can provide a method, a system or a computer program product. Thus, a form of a hardware embodiment, a software embodiment or an embodiment integrating software and hardware can be adopted in the present disclosure. Moreover, a form of the computer program product implemented on one or more computer available storage media (including, but not limited to, a disk memory, an optical memory and the like) containing computer available program codes can be adopted in the present disclosure.

The present disclosure is described with reference to flowcharts and/or block diagrams of the method, the device (system) and the computer program product according to the embodiments of the present disclosure. It shall be understood that each flow and/or block in the flowcharts and/or the block diagrams and a combination of the flows and/or the blocks in the flowcharts and/or the block diagrams can be realized by computer program instructions. These computer program instructions can be provided for a general computer, a dedicated computer, an embedded processor or processors of other programmable data processing devices to generate a machine, so that an apparatus for realizing functions assigned in one or more flows of the flowcharts and/or one or more blocks of the block diagrams is generated via instructions executed by the computers or the processors of the other programmable data processing devices.

These computer program instructions can also be stored in a computer readable memory capable of guiding the computers or the other programmable data processing devices to work in a specific mode, so that a manufactured product including an instruction apparatus is generated via the instructions stored in the computer readable memory, and the instruction apparatus realizes the functions assigned in one or more flows of the flowcharts and/or one or more blocks of the block diagrams.

These computer program instructions can also be loaded to the computers or the other programmable data processing devices, so that processing realized by the computers is generated by executing a series of operation steps on the computers or the other programmable devices, and therefore the instructions executed on the computers or the other programmable devices provide a step of realizing the functions assigned in one or more flows of the flowcharts and/or one or more blocks of the block diagrams.

The above is only preferred embodiments of the present disclosure, and is not intended to limit the protection scope of the present disclosure. Any modifications, equivalent replacements, improvements and the like within the principle of the present disclosure shall fall within the protection scope of the present disclosure.

## Claims

1. A method for deciding Voice over Long Term Evolution, VoLTE, call routing, comprising:
when a call is originated from a mobile Circuit-Switched, CS, network to a terminal, and when a device for comprehensive decision making of service domain and access domain in the mobile CS network determines that the terminal is in a dual registration mode, executing, by the device for comprehensive decision making of service domain and access domain in the mobile CS network, a Terminated Access Domain Selection, T-ADS, flow to decide an access domain.

2. The method as claimed in claim 1, wherein the device for comprehensive decision making of service domain and access domain in the mobile CS network is a Home Location Register, HLR.

3. The method as claimed in claim 2, further comprising:
when the terminal is in the dual registration mode, after the device for comprehensive decision making of service domain and access domain in the mobile CS network executes the T-ADS flow to decide the access domain, selecting to camp on a Long Term Evolution / Internet Protocol, IP, Multimedia Subsystem, LTE/IMS, network, routing the call to the LTE/IMS network, and when the call passes through a Media Gateway Control Function, MGCF, adding, by the MGCF, a set identifier to a Session Initiation Protocol, SIP, message, wherein the set identifier is used for indicating that there is no need to perform comprehensive service domain and access domain decision in the LTE/IMS network.

4. The method as claimed in claim 3, wherein the set identifier is an Access Code, AC.

5. The method as claimed in claim 3, further comprising:
when a call is originated from the LTE/IMS network to the terminal, and when a Call Session Control Function, CSCF, discovers that a session message does not contain the set identifier added by the MGCF, judging, by a device for comprehensive decision making of service domain and access domain in the LTE/IMS network, whether the terminal is in the dual registration mode.

6. The method as claimed in any one of claims 1 to 5, wherein
the mobile CS network is at least one of: Global System for Mobile Communications, GSM, network, Wideband Code Division Multiple Access, WCDMA, network, Code Division Multiple Access, CDMA, network, CDMA2000 network and Time Division-Code Division Multiple Access, TD-CDMA, network.

7. The method as claimed in any one of claims 1 to 5, wherein
the terminal is at least one of: a VoLTE-type multi-mode single-standby terminal, a VoLTE terminal supporting Single Radio Voice Call Continuity, SRVCC, a multi-mode single-standby terminal supporting a Worldwide Interoperability for Microwave Access, WiMax, and CS network, and a multi-mode single-standby terminal supporting a Wireless Fidelity, WiFi, and CS network.

8. A method for deciding Voice over Long Term Evolution, VoLTE, call routing, comprising:
when a call is originated from a Long Term Evolution / Internet Protocol, IP, Multimedia Subsystem, LTE/IMS, network to a terminal, and when a device for comprehensive decision making of service domain and access domain in the LTE/IMS network determines that the terminal is in a dual registration mode, executing, by the device for comprehensive decision making of service domain and access domain in the LTE/IMS network, a Terminated Access Domain Selection, T-ADS, flow to decide an access domain.

9. The method as claimed in claim 8, wherein the device for comprehensive decision making of service domain and access domain in the LTE/IMS network is a first Service Centralization and Continuity Application Server, SCC AS, in an IMS network.

10. The method as claimed in claim 9, further comprising:
when the terminal is in the dual registration mode, executing, by the device for comprehensive decision making of service domain and access domain in the LTE/IMS network, the T-ADS flow to decide the access domain, selecting to camp on a mobile Circuit-Switched, CS, network, and after the call is routed to the mobile CS network, cancelling, by a device for comprehensive decision making of service domain and access domain in the mobile CS network, a comprehensive service domain and access domain decision operation according to obtained false registration information of an IMS network user.

11. The method as claimed in claim 9, further comprising:
after the first SCC AS in the IMS network executes the T-ADS flow, disabling, by a last SCC AS in the IMS network, a T-ADS function.

12. A device for comprehensive decision making of service domain and access domain, comprising:
a judgement unit, configured to judge, when a call is originated from a mobile Circuit-Switched, CS, network to a terminal, whether the terminal is in a dual registration mode; and
a decision unit, configured to execute, when the terminal is in the dual registration mode, a Terminated Access Domain Selection, T-ADS, flow to decide an access domain.

13. The device as claimed in claim 12, wherein the device is a Home Location Register, HLR.

14. A device for comprehensive decision making of service domain and access domain, comprising:
a judgement unit, configured to judge, when a call is originated from a Long Term Evolution / Internet Protocol, IP, Multimedia Subsystem, LTE/IMS, network to a terminal, whether the terminal is in a dual registration mode; and
a decision unit, configured to execute, when the terminal is in the dual registration mode, a Terminated Access Domain Selection, T-ADS, flow to decide an access domain.

15. The device as claimed in claim 14, wherein the device is a first Service Centralization and Continuity Application Server, SCC AS, in an IMS network.

16. A computer storage medium, comprising a set of instructions, wherein when the set of instructions are executed, at least one processor is triggered to execute a method for deciding Voice over Long Term Evolution, VoLTE, call routing as claimed in any one of claims 1 to 7 or a method for deciding VoLTE call routing as claimed in any one of claims 8 to 11.
